(19) Europäisches Patentamt
European Patent Office
Office européen des brevets

(11) **EP 4 030 605 A1**

(12) **EUROPEAN PATENT APPLICATION**

(43) Date of publication:
**20.07.2022 Bulletin 2022/29**

(21) Application number: **21210749.4**

(22) Date of filing: **26.11.2021**

(51) International Patent Classification (IPC):
$H02M\ 1/42^{(2007.01)}$   $H02M\ 1/44^{(2007.01)}$
$H02M\ 3/00^{(2006.01)}$   $H02M\ 1/12^{(2006.01)}$
$H02M\ 3/335^{(2006.01)}$

(52) Cooperative Patent Classification (CPC):
**H02M 1/44; H02M 1/12; H02M 1/4225;
H02M 3/33573;** H02M 3/01

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.01.2021 CN 202110068053**

(71) Applicant: **Delta Electronics (Shanghai) Co., Ltd.
Shanghai 201209 (CN)**

(72) Inventors:
• **SUN, Yuanyue**
  **Shanghai, 201209 (CN)**
• **TAN, Kaining**
  **Shanghai, 201209 (CN)**
• **SUN, Jia**
  **Shanghai, 201209 (CN)**
• **LU, Hao**
  **Shanghai, 201209 (CN)**

(74) Representative: **2K Patentanwälte Blasberg
Kewitz & Reichel
Partnerschaft mbB
Schumannstrasse 27
60325 Frankfurt am Main (DE)**

(54) **CONVERSION SYSTEM AND CONTROL METHOD THEREOF**

(57)    The present application provides a conversion system and a control method thereof. The conversion system includes a PFC circuit (101), a bus capacitor (102) and a resonant converter (103). An input terminal of the PFC circuit (101) is electrically coupled to an alternating current source, and an output terminal of the PFC circuit (101) is electrically coupled to the bus capacitor (102) and an input terminal of resonant converter (103), and the control method includes the following steps: acquiring a phase of a ripple voltage of the bus capacitor; generating a time varying control signal according to the phase of the ripple voltage; adjusting a gain of the resonant converter periodically according to the time varying control signal to extend a frequency range of a drive signal output to a switching transistor in the resonant converter, thereby reducing a noise intensity of a single frequency band, so as to suppress the EMI noise.

```
┌──────────────────────────────────────────────┐
│ A controller acquires a phase of a ripple     │⟩ S1001
│             voltage of a bus capacitor         │
└──────────────────────────────────────────────┘
                      ↓
┌──────────────────────────────────────────────┐
│ The controller generates a time varying control│⟩ S1002
│   signal according to the phase of the ripple voltage │
└──────────────────────────────────────────────┘
                      ↓
┌──────────────────────────────────────────────┐
│ The controller periodically adjusts the gain of the resonant │⟩ S1003
│  converter according to the time varying control signal to    │
│  expand a frequency range of a drive signal output to a       │
│     switching transistor in the resonant converter            │
└──────────────────────────────────────────────┘
```

FIG. 6

**EP 4 030 605 A1**

## Description

## TECHNICAL FIELD

The present application relates to the field of power electronics technology, in particular, to a conversion system and a control method thereof.

## BACKGROUND

In a switching power supply product that includes a resonant converter, the resonant converter is usually a main source of noise. Electromagnetic Interference (EMI) generated by switching devices and magnetic component will flow into a power grid through a parasitic capacitance to ground, making it difficult for the switching power supply product to meet relevant electromagnetic compatibility (EMC) test standards.

In prior art, one solution to suppress EMI noise is by adding a filter circuit, thereby suppressing the EMI noise from being transmitted to the power grid. However, a multi-stage filter circuit is required to achieve the expected filtering effect, thus resulting in an increase in product volume and cost. Besides, the filter is susceptible to spatial coupling interference and thereby the filtering performance will degrade. Another solution to suppress EMI noise is by adding a shielding cover outside the resonant converter or adding a shielding cover outside the filter circuit to prevent spatial coupling interference from affecting the performance of the filter. However, this solution needs the introduction of grounded metal parts, which increases the cost and space. At the same time, it also needs special design to meet safety distance requirements. In addition, it is not suitable for occasions with many noise sources.

## SUMMARY

The present application provides a conversion system and a control method thereof, which are intended to suppress EMI noise by changing a control strategy of the conversion system, without changing a hardware structure of the conversion system.

In a first aspect, the present application provides a control method of a conversion system, the conversion system including a PFC circuit, a bus capacitor and a resonant converter, an input terminal of the PFC circuit is electrically coupled to an alternating current source, and an output terminal of the PFC circuit is electrically coupled to the bus capacitor and an input terminal of the resonant converter, where the control method includes the following steps:

acquiring a phase of a ripple voltage of the bus capacitor;
generating a time varying control signal according to the phase of the ripple voltage; and
adjusting a gain of the resonant converter periodically according to the time varying control signal to extend a frequency range of a drive signal output to a switching transistor in the resonant converter.

Optionally, the control method further includes:

acquiring a phase of an alternating current signal at the input terminal of the PFC circuit, and acquiring the phase of the ripple voltage of the bus capacitor according to the phase of the alternating current signal.
Optionally, the resonant converter includes a primary circuit, a resonant circuit, and a secondary circuit connected in sequence, and the primary circuit includes a first bridge arm and a second bridge arm, the first bridge arm includes a first switching transistor and a second switching transistor, and the second bridge arm includes a third switching transistor and a fourth switching transistor;
wherein the time varying control signal is a phase shift angle or a phase shift time, and the step of adjusting the gain of the resonant converter periodically according to the phase shift angle or the phase shift time specifically includes:
controlling, according to the phase shift angle or the phase shift time, to delay a conducted moment of the fourth switching transistor by the phase shift angle or the phase shift time relative to a conducted moment of the first switching transistor; and, controlling to delay a conducted moment of the third switching transistor by the phase shift angle or the phase shift time relative to a conducted moment of the second switching transistor.

Optionally, a direction in which the gain of the resonant converter is changed by the phase shift angle or the phase shift time is the same as a direction in which the gain of the resonant converter is changed by the ripple voltage of the bus capacitor.

Optionally, the time varying control signal is an output reference ripple, and the step of adjusting the gain of the resonant converter periodically according to the output reference ripple, specifically includes:

superimposing the output reference ripple with an original output reference signal to obtain an adjusted output reference signal; and
adjusting a frequency of the drive signal through a closed-loop control according to the adjusted output reference signal, so that an actual output signal of the resonant converter follows the adjusted output reference signal.

Optionally, the actual output signal and the output reference signal are voltage signals or current signals.

Optionally, the resonant converter includes a primary circuit, a resonant circuit, and a secondary circuit connected in sequence, and the primary circuit is a full bridge circuit or a half bridge circuit.

Optionally, a direction in which the gain of the resonant converter is changed by the output reference ripple is the same as a direction in which the gain of the resonant converter is changed by the ripple voltage of the bus capacitor.

Optionally, a change period of the time varying control signal is the same as a change period of the ripple voltage of the bus capacitor.

Optionally, the alternating current source is a single phase alternating current source or a three phase alternating current source.

Optionally, the resonant converter is an LLC resonant converter or an LC resonant converter.

In a second aspect, the present application provides a conversion system, including: a PFC circuit, a bus capacitor, a resonant converter, and a controller; an input terminal of the PFC circuit is electrically coupled to an alternating current source, an output terminal of the PFC circuit is electrically connected to the bus capacitor and an input terminal of the resonant converter, and the controller is coupled to the resonant converter, the controller includes:

    a time varying signal generating unit, configured to generate a time varying control signal according to a phase of a ripple voltage of the bus capacitor; and a drive signal adjusting unit, configured to periodically adjust a gain of the resonant converter according to the time varying control signal, so that a frequency range of a drive signal output to the resonant converter becomes larger.

Optionally, the controller further includes: a phase calculation unit, configured to acquire a phase of an alternating current signal at the input terminal of the PFC circuit, and calculate the phase of the ripple voltage of the bus capacitor according to the phase of the alternating current signal.

Optionally, the resonant converter includes a primary circuit, a resonant circuit, and a secondary circuit connected in sequence; the primary circuit includes a first bridge arm and a second bridge arm, the first bridge arm includes a first switching transistor and a second switching transistor, and the second bridge arm includes a third switching transistor and a fourth switching transistor;

    the time varying control signal is a phase shift angle or a phase shift time,
    the drive signal adjusting unit is configured to control, according to the phase shift angle or the phase shift time, to delay a conducted moment of the fourth switching transistor by the phase shift angle or the phase shift time relative to a conducted moment of the first switching transistor; and control to delay a conducted moment of the third switching transistor by the phase-shifting angle or the phase-shifting time relative to a conducted moment of the second switching transistor.

Optionally, a direction in which the gain of the resonant converter is changed by the phase shift angle or the phase shift time is the same as a direction in which the gain of the resonant converter is changed by the ripple voltage of the bus capacitor.

Optionally, the time-varying control signal is an output reference ripple,

the drive signal adjustment unit is configured to superimpose the output reference ripple with an original output reference signal to obtain an adjusted output reference signal, and adjust a frequency of the drive signal through closed-loop control according to the adjusted output reference signal, so that an actual output signal of the resonant converter follows the adjusted output reference signal.

Optionally, the actual output signal and the output reference signal are voltage signals or current signals.

Optionally, a direction in which the gain of the resonant converter is changed by the output reference ripple is the same as a direction in which the gain of the resonant converter is changed by the ripple voltage of the bus capacitor.

Optionally, a change period of the time varying control signal is the same as a change period of the ripple voltage of the bus capacitor.

Optionally, the alternating current source is a single phase alternating current source or a three phase alternating current source.

In a third aspect, the present application provides a control method of a resonant converter. The resonant converter includes a primary circuit, a resonant circuit, and a secondary circuit connected in sequence, the primary circuit including a first bridge arm and a second bridge arm, the first bridge arm includes a first switching transistor and a second switching transistor, and the second bridge arm includes a third switching transistor and a fourth switching transistor, and the control method includes the following steps:

    generating drive signals for the first to fourth switching transistors according to a preset phase shift angle or preset phase shift time which changes periodically, so that a gain of the resonant converter changes periodically; and adjusting frequency ranges of the drive signals output to the first to the fourth switching transistors through closed-loop control according to a change of the gain of the resonant converter.

Optionally, the resonant converter is an LLC resonant converter or an LC resonant converter.

## BRIEF DESCRIPTION OF DRAWINGS

FIG. 1 is a schematic structural diagram of a conversion system on which a control method provided by an embodiment of the present application is based;

FIG. 2 is a schematic structural diagram of a conversion system on which a control method provided by another embodiment of the present application is based;

FIG. 3 is a schematic structural diagram of a conversion system on which a control method provided by another embodiment of the present application is based;

FIG. 4 is a schematic structural diagram of a conversion system on which a control method provided by another embodiment of the present application is based;

FIG. 5 is a schematic structural diagram of a conversion system on which a control method provided by another embodiment of the present application is based;

FIG. 6 is a schematic flowchart of a control method provided by an embodiment of the present application;

FIG. 7 is a schematic diagram of characteristics of a resonant converter provided by an embodiment of the present application;

FIG. 8 is a schematic diagram of a relationship between an input signal and a ripple voltage signal provided by an embodiment of the present application;

FIG. 9 is a schematic diagram of a relationship between an output reference ripple and an ripple voltage signal provided by another embodiment of the present application;

FIG. 10 is a schematic flowchart of a control method of a resonant converter provided by an embodiment of the present application;

FIG. 11 is a schematic structural diagram of a conversion system provided by an embodiment of the present application;

FIG. 12 is a schematic structural diagram of a conversion system provided by another embodiment of the present application;

FIG. 13 is a schematic structural diagram of a conversion system provided by another embodiment of the present application; and

FIG. 14 is a schematic structural diagram of a conversion system provided by another embodiment of the present application.

## DESCRIPTION OF EMBODIMENTS

In order to make the purpose, technical solutions and advantages of the present application clearer, the technical solutions in the present application will be described clearly and completely in conjunction with the accompanying drawings in the present application. Obviously, the described embodiments are part of the embodiments of the present application, but not all embodiments. Based on the embodiments in the present application, all other embodiments obtained by those of ordinary skill in the art without paying creative work shall fall within the protection scope of the present application.

In a conventional conversion system, the purpose of suppressing EMI noise is usually achieved by adding a filter or adding a protective cover, however, the above two methods require changes on the hardware structure of the conversion system, thus increasing the cost and volume of the conversion system. The control method and conversion system provided by the embodiments of the present application suppress EMI noise in a software control manner without changing the hardware structure of the conversion system. In light load or heavy load, the controller of the resonant converter will automatically adjust an operating frequency to keep an output voltage of the resonant converter stable. A fluctuation range of the operating frequency of the resonant converter depends on a load level, a fluctuation range of a bus voltage and resonant circuit parameters, etc., but a range of the operating frequency of the resonant converter achieved by only automatic adjustment of the original controller is usually relatively narrow, which tends to produce more serious EMI noise. The present application introduces a time varying control signal in a control loop to periodically change a gain of the resonant converter, so as to extend a frequency range of a drive signal output to the switching transistor in the resonant converter, thereby reducing a noise intensity of a single frequency band.

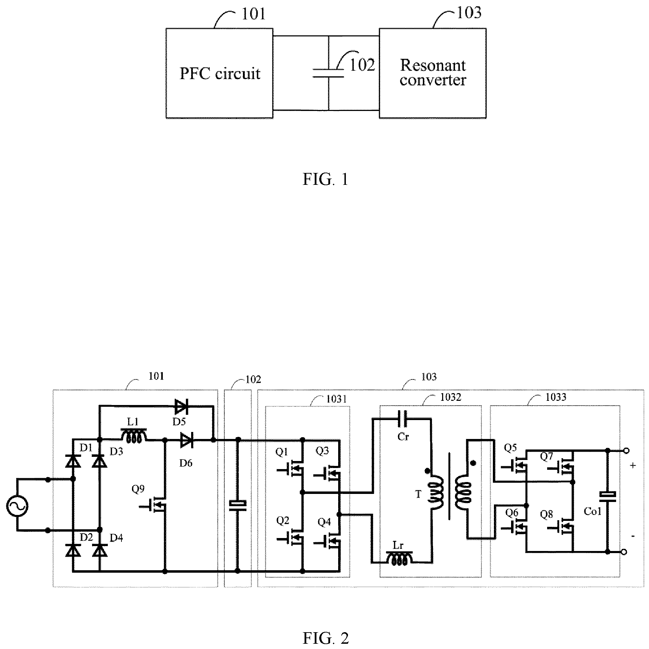

First, an embodiment of the present application provides a conversion system on which the control method is based is described. As illustrated in FIG. 1, the conversion system is an AC-DC conversion system, and the conversion system includes a power factor correction (PFC for short) circuit 101, a bus capacitor 102, and a resonant converter 103.

An input terminal of the PFC circuit 101 is electrically coupled to an alternating current source, an output terminal of the PFC circuit 101 is electrically connected to the bus capacitor 102, and the output terminal of the PFC circuit 101 is also electrically connected to an input terminal of the resonant converter 103. The PFC circuit 101 is configured to correct a power factor of the conversion system, the bus capacitor 102 is configured to stabilize a voltage at the input terminal of the resonant converter 103, and the resonant converter 103 is configured to implement voltage conversion.

The specific circuit structures of the PFC circuit 101 and the resonant converter 103 are described below, but are not limited to the specific circuit structures described in the following embodiments, and they may have other circuit structures.

As illustrated in FIG. 2, as a specific implementation of the conversion system illustrated in FIG. 1, when the alternating current source is a single phase alternating current source, the PFC circuit 101 is configured to correct the power factor of the conversion system and convert the single phase alternating current source into direct current output. The PFC circuit 101 includes a first diode D1 to a sixth diode D6, a ninth switching transistor Q9, and a first inductor L1. The diodes all include an anode and a cathode. The anode of the first diode D1 is connected to the cathode of the second diode D2, the anode of the third diode D3 is connected to the cathode of the fourth diode D4, and the cathode of the first diode D1 is connected to the cathode of the third diode D3, the anode of the second diode D2 is connected to the anode of the fourth diode D4, that is, the first diode D1 to the fourth diode D4 constitute a diode rectifier bridge. The cathode of the first diode D1 is connected to the anode of the sixth diode D6 through the first inductor L1, and the anode of the sixth diode D6 is also connected to a first end of the ninth switching transistor Q9, and a second end of the ninth switching transistor Q9 is connected to the anodes of the second diode D2 and the fourth diode D4. The PFC circuit 101 may further include a fifth diode D5, the anode of the fifth diode D5 is connected to the cathode of the first diode and the cathode of the third diode, and the cathode of the fifth diode D5 is connected to the cathode of the sixth diode D6.

The resonant converter 103 includes a primary circuit 1031, a resonant circuit 1032, and a secondary circuit 1033. An input terminal of the primary circuit 1031 is connected to the output terminal of the PFC circuit 101 and two ends of the bus capacitor 102, an output terminal of the primary circuit 1031 is connected to the input terminal of the resonant circuit 1032, and the output terminal of the resonant circuit 1032 is connected to an input terminal of the secondary circuit 1033.

In this embodiment, the primary circuit 1031 is a full bridge circuit, which specifically includes a first bridge arm and a second bridge arm. The first bridge arm includes a first switching transistor Q1 and a second switching transistor Q2, and the second bridge arm includes a third switching transistor Q3 and a fourth switching transistor Q4. Each switching transistor is provided with a first end, a second end and a control end, the second end of the first switching transistor Q1 is connected to the first end of the second switching transistor Q2, and the second end of the third switching transistor Q3 is connected to the first end of the fourth switching transistor Q4. The first end of the first switching transistor Q1 is connected to the first end of the third switching transistor Q3, and the second end of the second switching transistor Q2 is connected to the second end of the fourth switching transistor Q4.

The resonant circuit 1032 includes a transformer T, a resonant capacitor Cr, and a resonant inductor Lr. The resonant capacitor Cr and the resonant inductor Lr are connected to a primary coil of the transformer T in series. When an excitation inductance of the primary coil of the transformer T is considered, the excitation inductance of the transformer T, the resonant capacitor Cr, and the resonant inductance Lr constitute an LLC resonant circuit, and the resonant converter 103 is thus an LLC resonant converter. The input terminals of the resonance circuit 1032 are respectively connected to a midpoint of the first bridge arm and a midpoint of the second bridge arm in the primary circuit 1031. A secondary coil of the transformer T is connected to an input terminal of the secondary circuit 1033. When the excitation inductance of the transformer T is not considered, the resonant capacitor Cr and the resonant inductance Lr constitute an LC series resonant circuit, and the resonant converter 103 is thus an LC resonant converter.

In one embodiment, the secondary circuit 1033 is a full-bridge structure, that is, includes a third bridge arm, a fourth bridge arm, and a first stabilizing capacitor Co1, the third bridge arm includes a fifth switching transistor Q5 and a sixth switching transistor Q6, the fourth bridge arm includes a seventh switching transistor Q7 and an eighth switching transistor Q8. Each switching transistor has a first end, a second end and a control end, the second end of the fifth switching transistor Q5 is connected to the first end of the sixth switching transistor Q6, and the second end of the seventh switching transistor Q7 is connected to the first end of the eighth switching transistor Q8. The first end of the fifth switching transistor Q5 is connected to the first end of the seventh switching transistor Q7, and the second end of the sixth switching transistor Q6 is connected to the second end of the eighth switching transistor Q8. One end of the first voltage stabilizing capacitor Co1 is connected to the first end of the seventh switching transistor Q7, and the other end of the first voltage stabilizing capacitor Co1 is connected to the second end of the eighth switching transistor Q8.

In some other embodiments, the secondary circuit can also be a full-wave rectifier circuit, which is not limited in the present application.

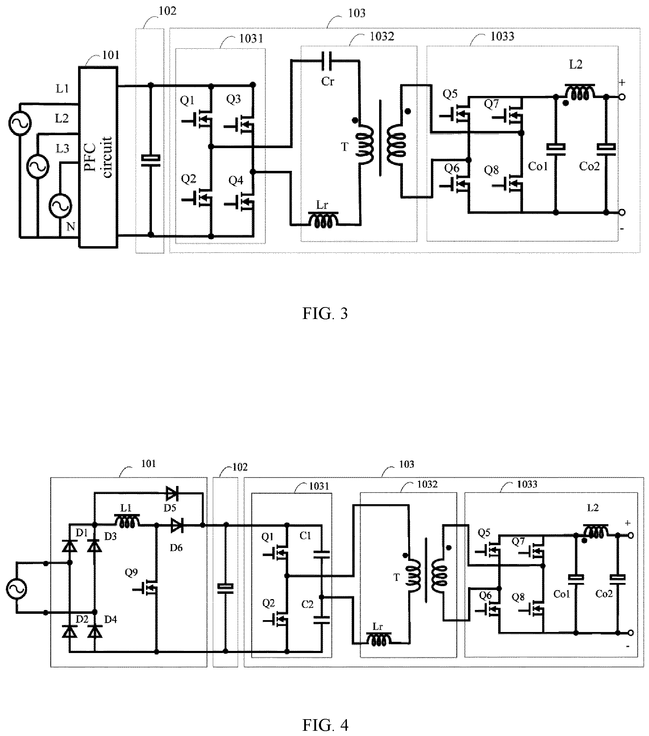

As illustrated in FIG. 3, as another specific implementation of the conversion system illustrated in FIG. 1, when the alternating current source is a three phase alternating current source, the PFC circuit 101 is configured to correct the power factor of the conversion system and convert the three phase alternating current source to direct current output. The specific circuit structure of the resonant converter 103 in this embodiment is basically the same as the specific circuit structure of the resonant converter 103 illustrated in FIG. 2. The PFC circuit 101 in this embodiment may be a PFC circuit structure well known to those skilled in the art, which is not repeated herein.

As illustrated in FIG. 4, as another specific implementation of the conversion system illustrated in FIG. 1, differences between the structure of the conversion system and that of the conversion system illustrated in FIG. 2 lie in that: in this embodiment, the primary circuit 1031 is a half-bridge circuit, which specifically includes a first bridge arm, a first capacitor C1, and a second capacitor C2. The first bridge arm includes a first switching transistor Q1 and a second switching transistor Q2. The second end of the first switching transistor Q1 is connected to the first end of the second switching transistor Q2, the second end of the first capacitor C1 is connected to the first end of the second capacitor C2, and the first end of the first switching transistor Q1 is connected to the first end of the first capacitor C1, the second end of the second switching transistor Q2 is connected to the second end of the second capacitor C2. One input terminal of the resonance circuit 1032 is connected to the midpoint of the first bridge arm, and the other input terminal is connected to a connection node of the first capacitor C1 and the second capacitor C2.

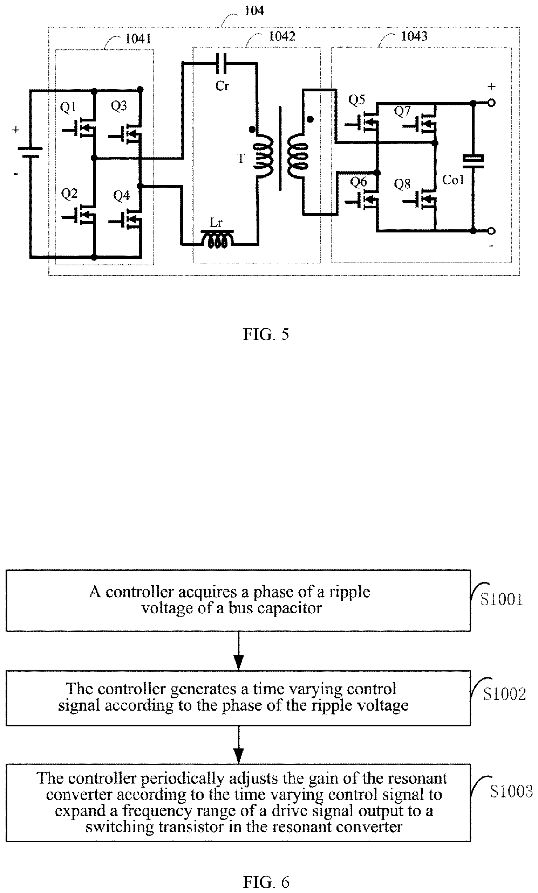

As illustrated in FIG. 5, the conversion system provided by another embodiment of the present application is a DC-DC conversion system. The conversion system includes a resonant converter 104. The resonant converter 104 includes a primary circuit 1041, a resonant circuit 1042, and a secondary circuit 1043. The structure of the resonant converter 104 illustrated in FIG. 5 is the same as that of the resonant converter 103 in FIG. 2, which will not be repeated herein.

In the following, the control method provided by an embodiment of the present application will be described. As illustrated in FIG. 6, an embodiment of the present application provides a control method which is applied to the conversion system illustrated in any one of the embodiments shown in FIGS. 1 to 4, that is, the alternating current source in the conversion system may be a single phase alternating current source or a three phase alternating current source, and the resonant converter is an LLC resonant converter or an LC resonant converter. The control method can be executed in a controller, and the control method includes the following steps:

S1001. The controller acquires a phase of a ripple voltage of the bus capacitor.

The bus capacitor 102 is electrically connected to the output terminal of the PFC circuit 101, the output terminal of the PFC circuit 101 is also electrically connected to the input terminal of the resonant converter 103, and the input terminal of the PFC circuit 101 is electrically connected to an alternating current source. When acquiring the phase of the ripple voltage of the bus capacitor 102, a ripple voltage signal of the bus capacitor 102 can be directly sampled by a sensor, and then the phase of the ripple voltage is extracted from the ripple voltage signal.

S1002. The controller generates a time varying control signal according to the phase of the ripple voltage.

The time varying control signal is configured to periodically adjust a gain of the resonant converter 103. The calculation formula of the gain of the resonant converter 103 is as follows:

$$M = \frac{\mathrm{n}(V_O + V_{rec})}{V_{in}} \qquad (1)$$

M represents the gain of the resonant converter 103, Vo represents an output voltage of the resonant converter, Vin represents an input voltage of the resonant converter, and $V_{rec}$ represents a voltage drop of a rectifier diode or a voltage drop of a synchronous rectifier of the secondary circuit in the resonant converter, n represents a turns ratio of the transformer.

According to Formula (1), it can be determined that the gain of the resonant converter 103 is related to the input voltage and the output voltage of the resonant converter 103. Since the phase of the ripple voltage of the bus capacitor reflects the change of the input voltage of the resonant converter 103, it can be seen from Formula (1) that the ripple voltage of the bus capacitor will cause the gain of the resonant converter 103 to change periodically. At this time, the controller in the conversion system executes original closed-loop control and adjusts a change of the operating frequency to adapt to the change of the gain caused by the ripple voltage. However, because a fluctuation range of the ripple voltage of the bus capacitor is related to various factors, for the case where the fluctuation range of the ripple voltage is small, correspondingly, the operating frequency of the resonant converter varies in a small range, thus rendering it difficult for the conversion system to meet EMC requirements near a specific frequency.

In order to extend the range of the operating frequency of the resonant converter, the controller of the present application generates a time varying control signal according to the phase of the ripple voltage of the bus capacitor, the time varying control signal is used to affect the gain of the resonant converter, and only when the influence caused by the time varying control signal on the gain is the same as that caused by the ripple voltage of the bus capacitor on the gain, that is, the time varying control signal and the ripple voltage increase the operating frequency of the resonant converter instantaneously, or reduce the operating frequency of the resonant converter instantaneously, as a result, the EMI noise can be effectively suppressed. Therefore, in the present application, a time varying control signal is generated according to the phase of the ripple voltage.

It can be understood that, in the present application, there are many embodiments for the time varying control signal used to adjust the gain of the resonant converter. In one embodiment, the time varying control signal is a phase shift angle or a phase shift time, that is, an equivalent duty cycle of the resonant converter is changed through periodical adjustment of the phase shift angle or the phase shift time, thereby achieving the purpose of gain adjustment; In another embodiment, the time varying control signal is a duty cycle of a switching transistor in the primary circuit, that is, the gain of the resonant converter is changed periodically by periodically adjusting the duty cycle of the switching transistor in the primary circuit. It is worth noting that the maximum duty cycle should be less than 50%. In another embodiment, the time varying control signal is a time (delay time) during which the switching transistor of the secondary circuit continues to be conductive after the resonant current on the resonant inductor crosses zero. During the time when the switching transistor of the secondary circuit continues to be conductive, a resonant current in the primary circuit continues to increase, the periodic change of the gain is realized by periodically adjusting the delay time. In another embodiment, the time varying control signal is a time (lead time) during which the switching transistor of the secondary circuit is conducted in advance before the resonant current crosses zero, because after the switching transistor of the secondary circuit is conducted in advance, the secondary voltage of the transformer changes from positive to zero or from zero to positive in advance, or from negative to zero or from zero to negative in advance, therefore, the gain of the resonant converter can also be adjusted periodically by periodically adjusting the lead time. In another embodiment, the time varying control signal can also be an output reference ripple, that is, the gain of the resonant converter also changes periodically by superimposing the output reference ripple which changes periodically on the output reference voltage of the resonant converter, since an actual output voltage of the resonant converter changes with the output reference voltage. Of course, other implementations for adjusting the gain of the resonant converter are also possible, which will not be limited herein.

S1003. The controller periodically adjusts the gain of the resonant converter according to the time varying control signal to extend a frequency range of a drive signal output to the switching transistor in the resonant converter.

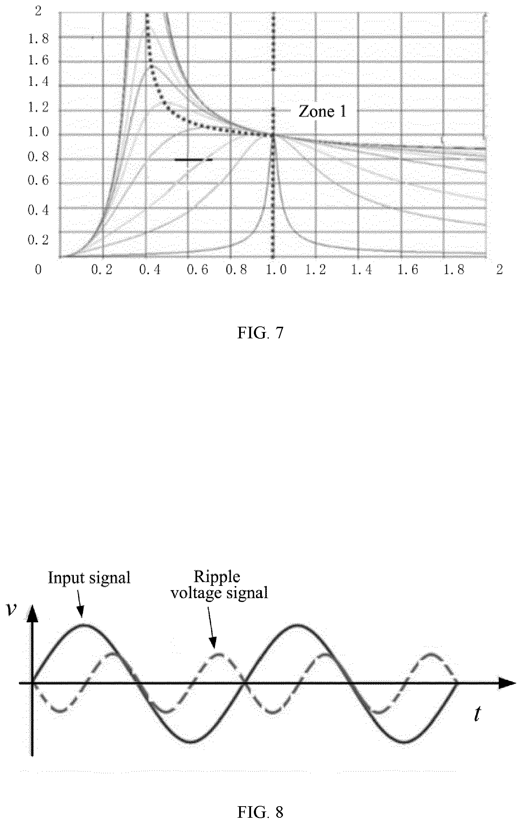

FIG. 7 is a characteristic diagram of the resonant converter being an LLC resonant converter, the abscissa represents the frequency of the resonant converter, and the ordinate represents the gain of the resonant converter. The gain of the resonant converter is related to its operating frequency. The resonant converter usually works in a zone 1, that is, a basic control signal is generated, and further a drive signal is generated according to the basic control signal. The drive signal is transmitted to the control end of the switching transistor in the resonant converter to control the resonant converter to work in the zone 1. In the zone 1, the gain decreases as the operating frequency increases. When the gain changes due to the ripple voltage of the bus capacitor, the operating frequency of the resonant converter is increased or decreased to adapt to the change of the gain of the resonant converter, so that the output voltage remains stable, that is, the actual output voltage follows the output reference voltage.

After adding the time varying control signal to the original closed-loop control loop of the resonant converter, since the time varying control signal is also used to periodically adjust the gain of the resonant converter, and the time varying control signal is generated according to the phase of the ripple voltage, therefore, the adjustment effect of the gain achieved by the time varying control signal and the adjustment effect of the gain achieved by the ripple voltage will be superimposed. When the two are positively superimposed, the change range of the gain of the resonant converter will be extended. Due to the effect of closed-loop control, the controller can only adapt to the change of the gain of the resonant converter by adjusting the change range of the operating frequency of the resonant converter, that is, when the change range of the gain of the resonant converter extends, the change range of the operating frequency of the resonant converter is also extended correspondingly.

In the control method provided by the embodiment of the present application, the noise intensity of a single frequency band is reduced by widening the operating frequency of the drive signal for the switching transistor in the resonant converter, hence, from the perspective of control, the noise of the resonant converter is reduced from the source.

Another embodiment of the present application provides a control method which is applied to the conversion system illustrated in FIG. 2 or FIG. 3, that is, the alternating current source in the conversion system is a single phase alternating current source or a three phase alternating current source, and the primary circuit of the resonant converter is a full-bridge inverter circuit. The control method specifically includes the following steps: S2001. Acquiring a phase of a ripple voltage of the bus capacitor.

The bus capacitor 102 is electrically connected to the output terminal of the PFC circuit 101, the output terminal of the PFC circuit 101 is also electrically connected to the input terminal of the resonant converter 103, and the input terminal of the PFC circuit 101 is electrically coupled to an alternating current source. When acquiring the phase of the ripple voltage of the bus capacitor 102, in one embodiment, a ripple voltage on the bus capacitor 102 can be directly collected, and the phase of the ripple voltage can be obtained. In another embodiment, a phase of an alternating current signal of the input terminal of the PFC circuit can be obtained first, the phase of the ripple voltage of the bus capacitor is then calculated according to the phase of the alternating current signal of the input terminal of the PFC circuit. In the way where the phase of the ripple voltage of the bus capacitor is indirectly acquired through the phase of the alternating current signal, the corresponding sampling circuit and the signal processing circuit can be omitted, thereby saving hardware and software resources, and achieving higher precision.

Taking it as an example where the alternating current signal at the input terminal of the PFC circuit is a sine wave signal, according to the mastery of the prior art by those skilled in the art, the relationship between the phase and frequency of the ripple voltage and the phase and frequency of the alternating current signal at the input terminal of the PFC circuit can be deduced. As illustrated in FIG. 8, the frequency of the ripple voltage of the bus is twice the frequency of the alternating current signal at the input terminal of the PFC circuit. When the phase of the voltage at the input terminal of the PFC circuit is 45 degrees, it corresponds to the minimum value of the bus voltage, that is, the minimum value of the ripple voltage of the bus. When the phase of the voltage at the input terminal of the PFC circuit is 135 degrees, it corresponds to the maximum value of the bus voltage, that is, the maximum value of the ripple voltage of the bus. That is to say, the phase of the alternating current voltage signal can be acquired by collecting the alternating current voltage signal at the input terminal of the PFC circuit, or by directly collecting the phase of the alternating current signal, and then the phase of the ripple voltage of the bus capacitor can be calculated.

S2002. Generating a time varying control signal according to the phase of the ripple voltage, where the time varying control signal is a phase shift angle or a phase shift time.

When the phase shift time or the phase shift angle is 0, switching transistors on the diagonal in the two bridge arms of the primary circuit of the resonant converter are conducted at the same time, that is, the first switching transistors Q1 of the first bridge arm and the fourth switching transistor Q4 of the second bridge arm are conducted at the same time, and the second switching transistor Q2 of the first bridge arm and the third switching transistor Q3 of the second bridge arm are conducted at the same time. By adjusting the phase shift angle or the phase shift time, a phase difference between conducted moments of the switching transistors on the diagonal in the two bridge arms is achieved, thus making an effective duty cycle change. In order to ensure that the output voltage remains unchanged, the controller will adjust the operating frequency of the resonant converter through the original closed-loop control to compensate for the effect caused by the phase shift angle or the phase shift time on the gain.

In addition, since the voltage ripple of the bus will also affect the gain, in order to maximize the range of the operating frequency of the resonant converter, it is necessary to ensure that the ripple voltage of the bus capacitor and the time varying control signal adjust the frequency towards the same direction, that is, the ripple voltage and the time varying control signal will both increase the frequency or decrease the frequency at the same time. The phase of the ripple voltage is used as a reference for the phase shift time or the phase shift angle, so that the phase of the ripple voltage and the phase shift time, or the phase of the ripple voltage and the phase shift angle change the gain of the resonant converter towards the same direction.

S2003. Adjusting the gain of the resonant converter periodically according to the time varying control signal to extend the frequency range of the drive signal output to the switching transistors in the resonant converter.

Where the gain of the resonant converter is periodically adjusted according to the phase shift angle or the phase shift time specifically includes: controlling, according to the phase shift angle or the phase shift time, to delay a conducted moment of the fourth switching transistor Q4 by the phase shift angle or the phase shift time relative to that of the first switching transistor Q1, and controlling to delay a conducted moment of the third switching transistor Q3 by the phase shift angle or the phase shift time relative to that of the second switching transistor Q2.

Preferably, a direction in which the gain of the resonant converter is changed by the phase shift angle or the phase shift time is the same as a direction in which the gain of the resonant converter is changed by the ripple voltage of the bus capacitor, and a change period of the phase shift angle or the phase shift time is the same as that of the ripple voltage of the bus capacitor.

The following is a detailed description of the phase relationship between the voltage ripple of the bus capacitor and the phase shift angle or phase shift time: the resonant converter works in the zone 1, when the voltage of the bus capacitor increases, in order to ensure that the output voltage of the resonant converter remains unchanged, the gain of the resonant converter needs to be reduced, and the frequency of the drive signal for the switching transistor in the resonant converter will be increased to reduce the gain. Conversely, when the voltage of the bus capacitor decreases, in order to ensure that the output voltage of the resonant converter remains unchanged, the gain of the resonant converter needs to be increased, and the frequency of the drive signal for the switching transistor in the resonant converter will be reduced to increase the gain.

In addition, when the phase shift time or the phase shift angle increases, the effective duty cycle of the resonant converter becomes smaller. In order to keep the output voltage unchanged, the gain needs to be increased, that is, under the original closed-loop control of the controller of the conversion system, the frequency of the drive signal for the switching transistor in the resonant converter is reduced to compensate for the gain change caused by the decrease in the effective duty cycle. Conversely, when the phase shift time or the phase shift angle is reduced, the effective duty cycle of the resonant converter becomes larger. In order to ensure that the output voltage remains unchanged, the gain needs to be reduced. The controller will control the frequency of the drive signal for the switching transistor in the resonant converter to increase, so as to compensate for the gain change caused by the increase in the effective duty cycle.

When a time varying control signal is arbitrarily added to change the gain of the resonant converter, due to the closed-loop adjustment of the resonant converter, the purpose of stabilizing the output voltage can be achieved by changing the frequency of the drive signal for the resonant converter. When the frequency of the time varying control signal is different from that of the ripple voltage of the bus, the adjustment effect caused by the ripple voltage of the bus capacitor on the operating frequency of the resonant converter and the adjustment effect caused by the time varying control signal on the operating frequency of the resonant converter will be superimposed randomly, sometimes reinforce each other and sometimes cancel each other out, which will cause low consistency among large batches and inconsistency in EMI effects of the same conversion system at different times. When the frequency of the time varying control signal is the same as that of the ripple voltage of the bus capacitor, both of the ripple voltage of the bus capacitor and the time varying control signal will increase or decrease the operating frequency of the resonant converter, and the operating frequency of the resonant converter will further increase or decrease, that is, reinforce each other, thereby achieving the purpose of reducing the noise intensity of a single frequency band.

Therefore, preferably, a direction in which the gain of the resonant converter is changed by the phase shift angle or the phase shift time is the same as a direction in which the gain of the resonant converter is changed by the ripple voltage of the bus capacitor, so as to achieve a reinforce effect therebetween. When the ripple voltage of the bus capacitor and the phase shift time change in opposite directions, or when the ripple voltage of the bus capacitor and the phase shift angle change in opposite directions, the frequency range of drive signal for the switching transistor in the resonant converter can be extended to the maximum extent, that is, to ensure positive accumulation of the change of the frequency. The change period of the time varying control signal is the same as that of the ripple voltage of the bus capacitor, which ensures the consistency of the effect of adjusting the frequency.

The range of the operating frequency of the resonant converter is determined by the peak-to-peak value (p-p value) of the phase shift time. The larger the p-p value of the phase shift time is, the wider the frequency change range becomes. The p-p value of the phase shift time refers to a difference between the maximum value and the minimum value of the phase shift time of the transistor drive signal.

The beneficial effects of the control method provided by the embodiments of the present application will be described as follows: the circuit structures and parameters of the PFC circuits, the bus capacitors, and the resonant converters in the two conversion systems are the same. The difference between the two is that: the first conversion system does not introduce a phase shift control strategy, that is, the conversion system only uses a basic control signal, and the second conversion system introduces a phase shift control strategy, that is, the conversion system uses a phase shift control strategy in addition to the basic control signal. The phase shift control strategy refers to the control method described in S2001 to S2003, the frequency of the drive signal for the switching transistor in the resonant converter is changed from a range of 20kHz to a range of 40kHz, and the EMI noise intensity is reduced by 15dB.

In the control method provided by the embodiments of the present application, after applying the phase shift angle or the phase shift time with a change direction opposite to that of the voltage ripple of the bus capacitor, the range of the operating frequency of the resonant converter is widened, so that the average value and the quasi-peak value of the noise in each frequency band are reduced to achieve the purpose of improving EMC performance.

Another embodiment of the present application provides a control method, which is also based on the conversion system illustrated in any one of FIGS. 1 to 4, that is, the primary circuit of the resonant converter is a full-bridge circuit or a half-bridge circuit, and the alternating current source is a single phase alternating current source or a three phase alternating current source, and the resonant converter is an LLC resonant converter or an LC resonant converter. The control method specifically includes the following steps:

S3001. Acquiring a phase of the ripple voltage of the bus capacitor.

This step has been described in detail in the above-mentioned embodiment, which will not be repeated herein.

S3002. Generating a time varying control signal according to the phase of the ripple voltage, where the time varying control signal is an output reference ripple.

Similar to the principle of changing the phase shift time or the phase shift angle, by applying a reference ripple signal to the output reference signal of the resonant converter, the gain of the resonant converter can also be changed, therefore, the frequency of a drive signal for the switching transistor in the resonant converter is changed to compensate for the change of the gain and the purpose of widening the frequency change range is achieved.

S3003. Adjusting a gain of the resonant converter periodically according to the time varying control signal to extend the frequency range of the drive signal output to the switching transistor in the resonant converter.

Where the step of adjusting the gain of the resonant converter periodically according to the output reference ripple specifically includes: superimposing the output reference ripple with an original output reference signal to obtain an adjusted output reference signal, adjusting the frequency of the drive signal through closed-loop control according to the adjusted output reference signal, so that an actual output signal of the resonant converter follows the adjusted output reference signal. The actual output signal and the output reference signal may be voltage signals or current signals.

Preferably, a direction in which the gain of the resonant converter is changed by the output reference ripple is the same as a direction in which the gain of the resonant converter is changed by the ripple voltage of the bus capacitor.

Taking it as an example where the output reference ripple and the output reference signal are voltage signals, in a case where the input voltage remains unchanged, the output reference ripple is superimposed on the original output reference voltage to obtain the output reference voltage Vo ref which changes periodically. When the output reference voltage Vo_ref increases, the gain of the resonant converter increases. By controlling the frequency of the drive signal for the switching transistor in the resonant converter to decrease, the actual output voltage of the resonant converter increases following the output reference voltage Vo_ref. When the output reference voltage Vo ref decreases, the gain of the resonant converter decreases. By controlling the frequency of the drive signal for the switching transistor in the resonant converter to increase, the actual output voltage of the resonant converter decreases following the output reference voltage Vo_ref. Therefore, when the output reference voltage ripple reaches the maximum, the operating frequency of the resonant converter becomes the lowest, and when the output reference voltage ripple reaches the minimum, the operating frequency of the resonant converter becomes the highest.

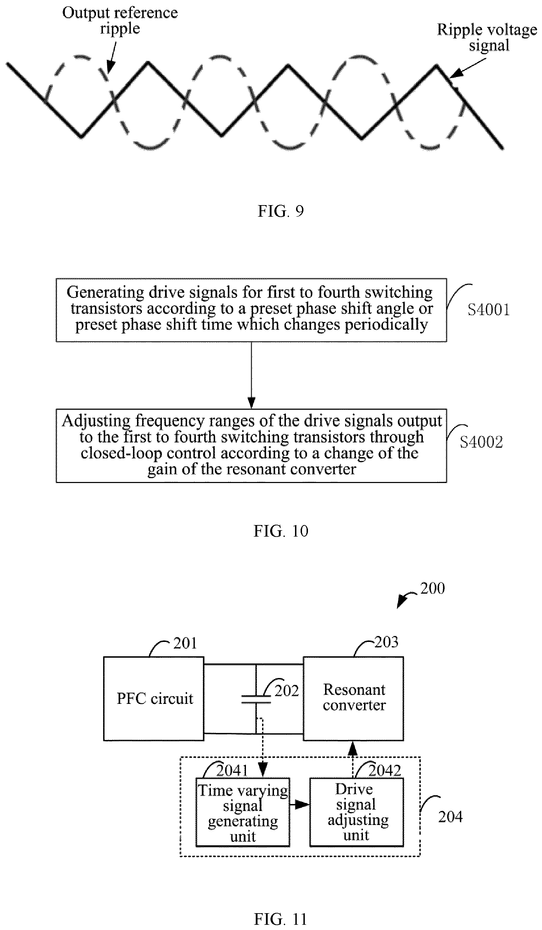

Considering that the voltage of the bus capacitor also has ripples, the influence caused by the ripple voltage of the bus capacitor on the gain of the resonant converter has been described in the above-mentioned embodiments, which will not be repeated herein. According to the above regulation law, when phases of the output reference ripple and the ripple voltage of the bus capacitor are opposite, as illustrated in FIG. 9, the two have the same influence on the gain of the resonant converter, so that the frequency change range of the drive signal for the switching transistor in the resonant converter is the largest.

The amplitude fluctuation range (p-p value) of the output reference signal refers to the difference between the maximum value and the minimum value of the output reference ripple. The larger the amplitude fluctuation range is, the larger the frequency change range of the drive signal for the switching transistor in the resonant converter becomes. For example: when the amplitude fluctuation range of the output reference signal is 100mV, the corresponding frequency change range is 180k-200k. When the amplitude fluctuation range of the output reference signal is 150mV, the corresponding frequency change range is 190k-220k. It can be seen that, the EMI suppression performance when the amplitude fluctuation range of the output reference signal is 150mV is better than that when the amplitude fluctuation range of the output reference signal is 100mV. It is worth noting that there is no linear relationship between the amplitude fluctuation range and the frequency change range of the output reference ripple, and specific parameters need to be set according to requirements for the EMI suppression performance.

The beneficial effects of the control method provided by the embodiments of the present application will be described as follows: the circuit structures and parameters of the PFC circuits, the bus capacitors, and the resonant converters in the two conversion systems are the same. The difference between the two is that: the first conversion system does not introduce an output reference ripple control strategy, that is, the conversion system only uses a basic control signal, and the second conversion system introduces an output reference ripple control strategy, that is, the conversion system uses the output reference ripple control strategy in addition to the basic control signal. The output reference ripple control strategy refers to the control method described in S3001 to S3003, the frequency of the drive signal for the switching transistor in the resonant converter is changed from a range of 10kHz to a range of 40kHz, and the EMI noise intensity is reduced by 6dB.

In the control method provided by the embodiment of the present application, by applying the output reference ripple whose phase is opposite to that of the ripple voltage of the bus capacitor, the gain of the resonant converter can be adjusted periodically, thereby extending the frequency change range of the drive signal for the switching transistor in the resonant converter, so that the average value and the quasi-peak value of the noise in each frequency band are reduced to achieve the purpose of improving EMC performance.

As illustrated in FIG. 10, another embodiment of the present application provides a control method of a resonant converter. The control method is based on the conversion system illustrated in FIG. 5, that is, the conversion system is a DC-DC conversion system, and the resonant converter is an LLC Resonant converter or LC resonant converter. The control method specifically includes the following steps:

S4001. Generating drive signals for the first to fourth switching transistors according to a preset phase shift angle or preset phase shift time which changes periodically.

The drive signal is used to control to delay a conducted moment of the fourth switching transistor Q4 by the phase shift angle or the phase shift time relative to that of the first switching transistor Q1, and to control to delay a conducted moment of the third switching transistor Q3 by the phase shift angle or the phase shift time relative to that of the second switching transistor Q2.

When the phase shift time or the phase shift angle is 0, switching transistors on the diagonal in the two bridge arms are conducted at the same time, that is, the first switching transistor Q1 and the fourth switching transistor Q4 in the primary circuit are conducted at the same time, the second switching transistor Q2 and the third switching transistor Q3 in the primary circuit are conducted at the same time. By applying a phase shift angle or phase shift time which changes periodically, a phase difference or time difference between conducted moments of the switching transistors on the diagonal in the two bridge arms changes periodically, so that an effective duty cycle changes periodically, which in turn makes the gain of the resonant converter changes periodically.

S4002. Adjusting frequency ranges of the drive signals output to the first to fourth switching transistors through closed-loop control according to a change of the gain of the resonant converter.

When the phase shift time or the phase shift angle increases, the effective duty cycle of the resonant converter decreases. Since the output voltage of the resonant converter still needs to be remained unchanged, the gain of the resonant converter needs to be increased. Under the action of the closed-loop control, the frequency of the drive signal output to the switching transistor in the resonant converter is reduced. Conversely, when the phase shift time or the phase shift angle decreases, the effective duty cycle of the resonant converter increases. Since the output voltage of the resonant converter still needs to be remained unchanged, the gain of the resonant converter needs to be reduced. Under the action of the closed-loop control, the frequency of the drive signal output to the switching transistor in the resonant converter increases.

In the control method provided by the embodiments of the present application, the frequency range of the drive signal for the switching transistor in the resonant converter is widened by applying to the control loop a phase shift angle or phase shift time which changes periodically, so that the average value and the quasi-peak value of the noise in each frequency band will be reduced to achieve the purpose of improving EMC performance.

As illustrated in FIG. 11, another embodiment of the present application further provides a conversion system 200. The conversion system 200 includes a PFC circuit 201, a bus capacitor 202, a resonant converter 203 and a controller 204.

An input terminal of the PFC circuit 201 is electrically coupled to an alternating current source, an output terminal of the PFC circuit 201 is electrically connected to the bus capacitor 202, the output terminal of the PFC circuit 201 is also electrically connected to an input terminal of the resonant converter 203, and the controller 204 is coupled to the resonant converter 203. In other embodiments, the controller 204 is further coupled to the PFC circuit 201.

The PFC circuit 201 is configured to convert an alternating current signal into a direct current signal and correct a power factor of the conversion system. The bus capacitor 202 is configured to stabilize an input voltage of the resonant converter 203, the resonant converter 203 is configured to implement voltage conversion, and the controller 204 is configured to control a working state of the resonant converter. In some embodiments, the controller 204 can also control a working state of the PFC circuit 201 at the same time.

The controller 204 includes a time varying signal generating unit 2041 and a drive signal adjusting unit 2042. An output terminal of the time varying signal generating unit 2041 is coupled to an input terminal of the drive signal adjusting unit 2042. The time varying signal generating unit 2041 is configured to generate a time varying control signal according to the phase of the ripple voltage of the bus capacitor. The drive signal adjusting unit 2042 is configured to periodically adjust the gain of the resonant converter 203 according to the time varying control signal, so that the frequency range of the drive signal output to the resonant converter 203 becomes larger.

The working principle of the conversion system is described below: according to Formula (1), it can be determined that the gain of the resonant converter 203 is related to an input signal and an output signal of the resonant converter 203. In addition, the phase of the ripple voltage of the bus capacitor reflects the change of the input voltage of the resonant converter 203, so a time varying control signal is generated according to the phase of the ripple voltage. That is, the time varying signal generating unit 2041 acquires the phase of the ripple voltage of the bus capacitor, and then generates the time varying control signal according to the phase of the ripple voltage of the bus capacitor. The drive signal adjusting unit 2042 is configured to periodically adjust the gain of the resonant converter according to the time varying control signal, so that the frequency range of the drive signal output to the resonant converter 203 becomes larger.

Continuing to refer to FIGS 7 and 8, the gain of the resonant converter is related to the operating frequency. The resonant converter usually works in the zone 1, that is, a basic control signal is generated, and further a drive signal is generated from the basic control signal. The drive signal is transmitted to the control end of the switching transistor in the resonant converter and to control the resonant converter to work in the zone 1. In the zone 1, the gain of the resonant converter decreases as the operating frequency increases. When the gain changes due to the ripple voltage of the bus capacitor, the operating frequency of the resonant converter is increased or decreased to adapt to the change of the gain of the resonant converter, so that the output voltage remains stable.

The time varying control signal is also used to periodically adjust the gain of the resonant converter, and the time varying control signal is generated according to the phase of the ripple voltage. Therefore, the adjustment effect of the gain achieved by the time varying control signal and the adjustment effect of the gain achieved by the ripple voltage are superimposed, when the two are positively superimposed, the change range of the gain of the resonant converter is extended. Due to the effect of closed-loop control, the controller can only adapt to the gain of the resonant converter by adjusting the change range of the operating frequency of the resonant converter, that is, when the change range of the gain of the resonant converter extends, the change range of the operating frequency of the resonant converter extends accordingly.

In the conversion system provided by the embodiment of the present application, the noise intensity of a single frequency band is reduced by widening the frequency of the drive signal for the resonant converter, hence, by the control method, the noise of the resonant converter is reduced from the source.

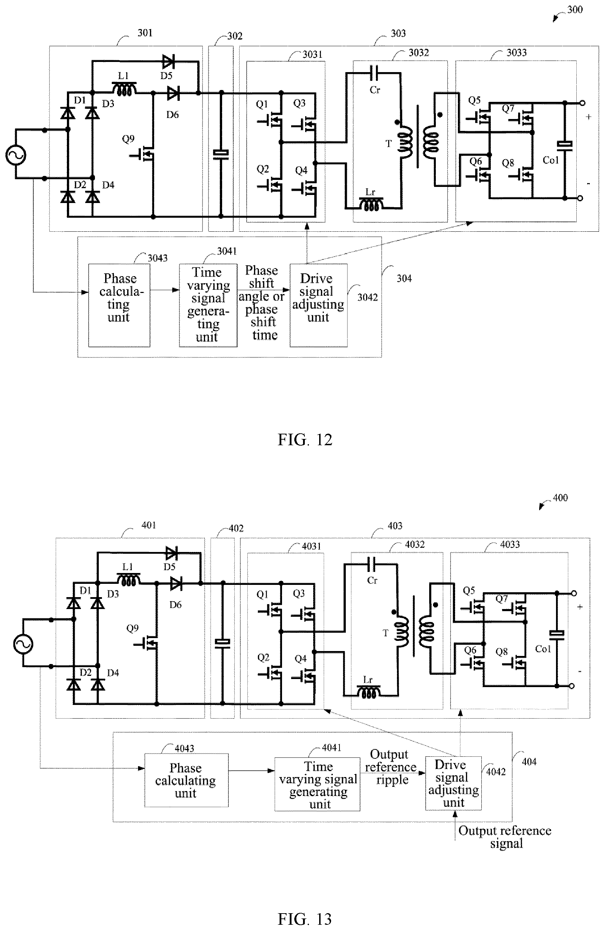

As illustrated in FIG. 12, another embodiment of the present application further provides a conversion system 300. The conversion system 300 includes a PFC circuit 301, a bus capacitor 302, a resonant converter 303 and a controller 304.

Since the structures of the PFC circuit 301 and the resonant converter 303 are the same as the circuit structures in FIG. 2, it will not be repeated herein.

The controller 304 includes a time varying signal generating unit 3041, a drive signal adjusting unit 3042, and a phase calculating unit 3043. An input terminal of the phase calculating unit 3043 is coupled to an input terminal of the PFC circuit 301, an output terminal of the phase calculating unit 3043 is coupled to an input terminal of the time varying signal generating unit 3041, and an output terminal of the time varying signal generating unit 3041 is coupled to an input terminal of the drive signal adjusting unit 3042.

The phase calculating unit 3043 is configured to acquire the phase of the alternating current signal at the input terminal of the PFC circuit 301, and calculate the phase of the ripple voltage of the bus capacitor according to the phase of the alternating current signal. The time varying signal generating unit 3041 is configured to generate a time varying control signal according to the phase of the ripple voltage of the bus capacitor. The time varying control signal is a phase shift angle or a phase shift time. The drive signal adjusting unit 3042 is configured to generate drive signals for the first to fourth switching transistors according to the phase shift angle or the phase shift time. Specifically, the conducted moment of the fourth switching transistor Q4 is controlled to be delayed by the phase shift angle or the phase shift time relative to that of the first switching transistor Q1, and the conducted moment of the third switching transistor Q3 is controlled to be delayed by the phase shift angle or the phase shift time relative to that of the second switching transistor Q2.

Preferably, a direction in which the gain of the resonant converter is changed by the phase shift angle or the phase shift time is the same as a direction in which the gain of the resonant converter is changed by the ripple voltage of the bus capacitor. A change period of the phase shift angle or the phase shift time is the same as that of the ripple voltage of the bus capacitor.

Preferably, the alternating current source is a single phase alternating current source or a three phase alternating current source.

Preferably, the resonant converter 103 is an LLC resonant converter or an LC resonant converter.

The working principle of the conversion system has been described in detail in the foregoing, which will not be repeated herein.

In the conversion system provided by the embodiment of the present application, the frequency range of the drive signal for the switching transistor in the resonant converter is widened by applying the phase shift angle or phase shift time which is opposite to the phase of the ripple voltage of the bus capacitor, so that the average value and the quasi-peak value of the noise in each frequency band will be reduced to achieve the purpose of improving EMC performance.

As illustrated in FIG. 13, another embodiment of the present application further provides a conversion system 400. The conversion system 400 includes a PFC circuit 401, a bus capacitor 402, a resonant converter 403, and a controller 404.

An input terminal of the PFC circuit 401 is electrically coupled to an alternating current source, an output terminal of the PFC circuit 401 is electrically connected to the bus capacitor 402, the output terminal of the PFC circuit 401 is also electrically connected to an input terminal of the resonant converter 403, and the controller 404 is coupled to the resonant converter 403.

The controller 404 includes a time varying signal generating unit 4041, a drive signal adjusting unit 4042, and a phase calculating unit 4043. An input terminal of the phase calculating unit 4043 is coupled to the input terminal of the PFC circuit 401, an output terminal of the phase calculating unit 4043 is coupled to an input terminal of the time varying signal generating unit 4041, and an output terminal of the time varying signal generating unit 4041 is coupled to an input terminal of the drive signal adjusting unit 4042.

The phase calculating unit 4043 is configured to acquire a phase of an alternating current signal at the input terminal of the PFC circuit 401, and calculate a phase of a ripple voltage of the bus capacitor according to the phase of the alternating current signal. The time varying signal generating unit 4041 is configured to generate a time varying control signal according to the phase of the ripple voltage of the bus capacitor. The time varying control signal is an output reference ripple, and the drive signal adjusting unit 4042 is configured to superimpose the output reference ripple with an original output reference signal to obtain an adjusted output reference signal, and the frequency of the drive signal is adjusted through closed loop according to the adjusted output reference signal, so that an actual output signal of the resonant converter follows the change of the adjusted output reference signal. The actual output signal and the output reference signal may be voltage signals or current signals.

Preferably, a direction in which the gain of the resonant converter is changed by the output reference ripple is the same as a direction in which the gain of the resonant converter is changed by the ripple voltage of the bus capacitor. A change period of the output reference ripple is the same as a change period of the ripple voltage of the bus capacitor.

It is worth noting that the present application focuses on the specific description of the embodiment in which the time varying control signal is the phase shift angle, the phase shift time, and the output reference ripple, but it is not limited thereto. In another embodiment, the time variable control signal can also be a duty cycle of the switching transistor in the primary circuit of the resonant converter, or it can be a time during which the switching transistor of the secondary circuit continues to conduct after the resonant current crosses zero (delay time), or it can be a time during which the switching transistor of the secondary circuit is conducted in advance before the resonant current crosses zero (lead time), or the like.

The working principle of the conversion system has been described in detail in the foregoing, which will not be repeated herein.

In the conversion system provided by the embodiment of the present application, the output reference ripple is determined according to the phase of the ripple voltage of the bus capacitor, so as to periodically adjust the gain of the resonant converter, thereby extending the frequency change range of the drive signal for the resonant converter, so that the average value and the quasi-peak value of the noise in each frequency band will be reduced to achieve the purpose of reducing noise and improving EMC performance.

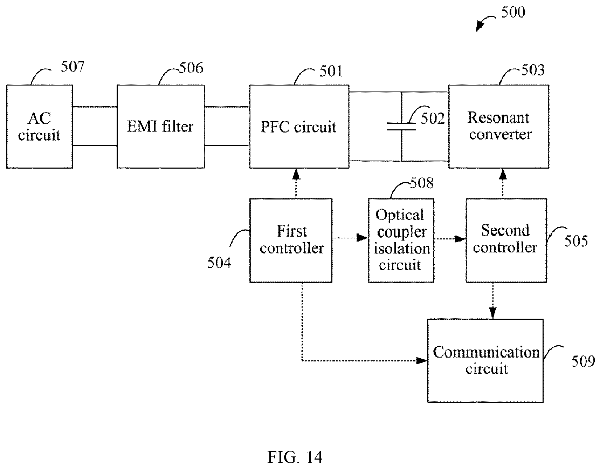

As illustrated in FIG. 14, another embodiment of the present application further provides a conversion system 500. The conversion system 500 includes a PFC circuit 501, a bus capacitor 502, a resonant converter 503, a first controller 504, a second controller 505, an EMI filter 506, an AC circuit 507, a communication circuit 509, and an optical coupler isolation circuit 508.

An output terminal of the AC circuit 507 is electrically connected to an input terminal of the EMI filter 506, an output terminal of the EMI filter 506 is electrically connected to an input terminal of the PFC circuit 501, an output terminal of the PFC circuit 501 is connected to the bus capacitor 502, and the output terminal of the PFC circuit 501 is also electrically connected to an input terminal of the resonant converter 503. The first controller 504 is coupled to the PFC circuit 501, and the second controller 505 is coupled to the resonant converter 503. The first controller 504 and the second controller 505 are coupled through the optical coupler isolation circuit 508, and the first controller 504 and the second controller 505 are both coupled to the communication circuit 509.

The AC circuit 507 may be a single phase alternating current source or a three phase alternating current source, or a power converter of which the output is an alternating current. The first controller 504 is configured to control the PFC circuit, and is also configured to sample signals from the alternating current source, such as current signals, voltage signals, and temperature signals, and calculate and output a phase of a ripple voltage of the bus capacitor based on the current signal or the voltage signal. The second controller 505 is configured to sample primary and secondary voltages, currents, and temperature signals of the resonant converter and so on. The second controller 505 is also configured to acquire the phase of the ripple voltage of the bus capacitor from the first controller 504 through the optical coupler isolation circuit 508, and control the resonant converter 503 according to the sampled signal. More specifically, a time varying control signal whose phase is opposite to the phase of the ripple voltage is generated according to the phase of the ripple voltage, and a pulse width modulation signal is generated after modulation, and the pulse width modulation signal controls the switching transistor in the resonant converter 503 to turn on or turn off. The communication circuit 509 is configured to sample all voltage signals, current signals, and temperature signals, and can also detect enable signals and fault signals in the conversion system, so as to report fault information to a host computer in real time.

Preferably, the first controller 504 and the second controller 505 are digital signal processors (DSP for short).

In the conversion system provided by the embodiment of the present application, the frequency of the drive signal for the resonant converter is widened to reduce the noise intensity of a single frequency band, hence, in a control manner, the noise of the resonant converter is reduced from the source.

## Claims

1. A control method of a conversion system, the conversion system comprising a power factor correction circuit, a bus capacitor and a resonant converter, an input terminal of the power factor correction circuit is electrically coupled to an alternating current source, and an output terminal of the power factor correction circuit is electrically coupled to the bus capacitor and an input terminal of the resonant converter, wherein the control method comprises the following steps:

   acquiring (S1001) a phase of a ripple voltage of the bus capacitor;
   generating (S1002) a time varying control signal according to the phase of the ripple voltage; and
   adjusting (S1003) a gain of the resonant converter periodically according to the time varying control signal to extend a frequency range of a drive signal output to a switching transistor in the resonant converter.

2. The control method according to claim 1, wherein the control method further comprises:

acquiring a phase of an alternating current signal at the input terminal of the power factor correction circuit, and acquiring the phase of the ripple voltage of the bus capacitor according to the phase of the alternating current signal.

3. The control method according to claim 1 or 2, wherein the resonant converter comprises a primary circuit, a resonant circuit, and a secondary circuit connected in sequence, and the primary circuit comprises a first bridge arm and a second bridge arm, the first bridge arm comprises a first switching transistor and a second switching transistor, and the second bridge arm comprises a third switching transistor and a fourth switching transistor;
wherein the time varying control signal is a phase shift angle or a phase shift time, and the step of adjusting the gain of the resonant converter periodically according to the phase shift angle or the phase shift time specifically comprises:
controlling, according to the phase shift angle or the phase shift time, to delay a conducted moment of the fourth switching transistor by the phase shift angle or the phase shift time relative to a conducted moment of the first switching transistor; and, controlling to delay a conducted moment of the third switching transistor by the phase shift angle or the phase shift time relative to a conducted moment of the second switching transistor.

4. The control method according to claim 3, wherein a direction in which the gain of the resonant converter is changed by the phase shift angle or the phase shift time is the same as a direction in which the gain of the resonant converter is changed by the ripple voltage of the bus capacitor.

5. The control method according to any of the claims 1 to 4, wherein the time varying control signal is an output reference ripple, and the step of adjusting the gain of the resonant converter periodically according to the output reference ripple specifically comprises:
superimposing the output reference ripple with an original output reference signal to obtain an adjusted output reference signal; and adjusting a frequency of the drive signal through a closed-loop control according to the adjusted output reference signal, so that an actual output signal of the resonant converter follows the adjusted output reference signal.

6. The control method according to claim 5, wherein the actual output signal and the output reference signal are voltage signals or current signals.

7. The control method according to claim 5 or 6, wherein the resonant converter comprises a primary circuit, a resonant circuit, and a secondary circuit connected in sequence, and the primary circuit is a full bridge circuit or a half bridge circuit.

8. The control method according to any of the claims 5 to 7, wherein a direction in which the gain of the resonant converter is changed by the output reference ripple is the same as a direction in which the gain of the resonant converter is changed by the ripple voltage of the bus capacitor.

9. The control method according to any of the claims 1 to 8, wherein a change period of the time varying control signal is the same as a change period of the ripple voltage of the bus capacitor.

10. The control method according to any of the claims 1 to 9, wherein the alternating current source is a single phase alternating current source or a three phase alternating current source.

11. The control method according to any of the claims 1 to 10, wherein the resonant converter is an LLC resonant converter or an LC resonant converter.

12. A conversion system, comprising: a power factor correction circuit (201), a bus capacitor (202), a resonant converter (203), and a controller (204);
an input terminal of the power factor correction circuit (201) is electrically coupled to an alternating current source, an output terminal of the power factor correction circuit (201) is electrically connected to the bus capacitor (202) and an input terminal of the resonant converter (203), and the controller (204) is coupled to the resonant converter (203), the controller (204) comprises:

a time varying signal generating unit (2041), configured to generate a time varying control signal according to a phase of a ripple voltage of the bus capacitor (202); and a drive signal adjusting unit (2042), configured to periodically adjust a gain of the resonant converter (203) according to the time varying control signal, so that a frequency range of a drive signal output to the resonant converter (203) becomes larger.

13. The conversion system according to claim 12, wherein the controller further comprises:
a phase calculation unit (3043), configured to acquire a phase of an alternating current signal at the input terminal of the power factor correction circuit (201), and calculate the phase of the ripple voltage of the bus capacitor (202) according to the phase of the alternating current signal.

14. The conversion system according to claim 12 or 13, wherein the resonant converter (203, 303) comprises a primary circuit (1031, 3031), a resonant circuit (1032, 3032), and a secondary circuit (1033, 3033) connected in sequence; the primary circuit (1031, 3031) comprises a first bridge arm and a second bridge arm, the first bridge arm comprises a first switching transistor (Q1) and a second switching transistor (Q2), and the second bridge arm comprises a third switching transistor (Q3) and a fourth switching transistor (Q4);

the time varying control signal is a phase shift angle or a phase shift time,
the drive signal adjusting unit (2042) is configured to control, according to the phase shift angle or the phase shift time, to delay a conducted moment of the fourth switching transistor (Q4) by the phase shift angle or the phase shift time relative to a conducted moment of the first switching transistor (Q1); and control to delay a conducted moment of the third switching transistor (Q3) by the phase shift angle or the phase shift time relative to a conducted moment of the second switching transistor (Q2).

15. The conversion system according to any of the claims 12 to 14, wherein:

the time varying control signal is an output reference ripple,
the drive signal adjustment unit (2042) is configured to superimpose the output reference ripple with an original output reference signal to obtain an adjusted output reference signal, and adjust a frequency of the drive signal through a closed-loop control according to the adjusted output reference signal, so that an actual output signal of the resonant converter (203) follows the adjusted output reference signal.

101

103

PFC circuit

102

Resonant
converter

FIG. 1

101

102

103

1031

1032

1033

L1

D5

D6

D1

D3

Q9

Q1

Q3

Cr

Q5

Q7

+

D2

D4

Q2

Q4

T

Lr

Q6

Q8

Co1

-

FIG. 2

FIG. 3

FIG. 4

FIG. 5

FIG. 6

FIG. 7

FIG. 8

Output reference
ripple

Ripple voltage
signal

FIG. 9

Generating drive signals for first to fourth switching
transistors according to a preset phase shift angle or
preset phase shift time which changes periodically

S4001

Adjusting frequency ranges of the drive signals output
to the first to fourth switching transistors through
closed-loop control according to a change of the
gain of the resonant converter

S4002

FIG. 10

200

201      203

| PFC circuit | 202 | Resonant converter |

2041      2042

| Time varying signal generating unit | Drive signal adjusting unit |

204

FIG. 11

FIG. 12

FIG. 13

FIG. 14

Europäisches
Patentamt

European
Patent Office

Office européen
des brevets

# EUROPEAN SEARCH REPORT

Application Number

EP 21 21 0749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 840 646 B (FSP POWERLAND TECHNOLOGY INC) 1 March 2017 (2017-03-01)<br>* abstract *; figure 5 *<br>* paragraphs [0026] – [0028] * | 1–15 | INV.<br>H02M1/42<br>H02M1/44<br>H02M3/00<br>H02M1/12<br>H02M3/335 |
| A | EP 3 522 353 A1 (DAIKIN IND LTD [JP]) 7 August 2019 (2019-08-07)<br>* paragraphs [0033] – [0035], [0067], [0069]; figures 1,2 * | 1–15 | |
| A | US 2014/160805 A1 (OH INHWAN [US] ET AL) 12 June 2014 (2014-06-12)<br>* paragraphs [0029], [0044] – [0047]; figure 2 * | 1–15 | |
| A | WANG HAOYU: "A phase shift full bridge based reconfigurable PEV onboard charger with extended ZVS range and zero duty cycle loss",<br>2016 IEEE APPLIED POWER ELECTRONICS CONFERENCE AND EXPOSITION (APEC), IEEE,<br>20 March 2016 (2016-03-20), pages 480–486,<br>XP032898827,<br>DOI: 10.1109/APEC.2016.7467915<br>ISBN: 978-1-4673-8393-6<br>[retrieved on 2016-05-10]<br>* abstract *; figure 2 * | 3,14 | |

TECHNICAL FIELDS
SEARCHED        (IPC)

H02M

The present search report has been drawn up for all claims

| Place of search | Date of completion of the search | Examiner |
|---|---|---|
| The Hague | 16 May 2022 | Standaert, Frans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 21 0749

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2022

| Patent document cited in search report | | Publication date | Patent family member(s) | | Publication date |
|---|---|---|---|---|---|
| CN 103840646 | B | 01-03-2017 | NONE | | |
| EP 3522353 | A1 | 07-08-2019 | AU | 2017336032 A1 | 16-05-2019 |
| | | | CN | 109804546 A | 24-05-2019 |
| | | | EP | 3522353 A1 | 07-08-2019 |
| | | | JP | 6195003 B1 | 13-09-2017 |
| | | | JP | 2018057195 A | 05-04-2018 |
| | | | US | 2020007049 A1 | 02-01-2020 |
| | | | WO | 2018061342 A1 | 05-04-2018 |
| US 2014160805 | A1 | 12-06-2014 | TW | 201433074 A | 16-08-2014 |
| | | | US | 2014160805 A1 | 12-06-2014 |
| | | | US | 2016294291 A1 | 06-10-2016 |
| | | | WO | 2014088708 A1 | 12-06-2014 |

EPO FORM P0459

For more details about this annex : see Official Journal of the European Patent Office, No. 12/82